# EUROPÄISCHE PATENTSCHRIFT

(11) **EP 1 287 272 B1**
(45) Veröffentlichungstag und Bekanntmachung des Hinweises auf die Patenterteilung: **22.03.2006**
(21) Anmeldenummer: 01936342.3
(22) Anmeldetag: 09.05.2001
(51) Int. Cl.: F16D 65/34, B60T 13/74

(54) **ELEKTROMOTORISCHE FESTSTELLBREMSE, INSBESONDERE FÜR EIN KRAFTFAHRZEUG**
ELECTROMOTIVE PARKING BRAKE, ESPECIALLY FOR AN AUTOMOBILE
FREIN DE STATIONNEMENT COMMANDE PAR UN MOTEUR ELECTRIQUE ET DESTINE NOTAMMENT A UN VEHICULE AUTOMOBILE

(30) Priorität: 22.05.2000 EP 00110846; 25.01.2001 DE 10103295
(43) Veröffentlichungstag der Anmeldung: 05.03.2003
(73) Patentinhaber: SIEMENS AKTIENGESELLSCHAFT, 80333 München (DE)
(72) Erfinder: BAIER-WELT, Christian, 97222 Rimpar (DE); ROOS, Stephan, 97877 Wertheim (DE)
(86) Internationale Anmeldenummer: PCT/EP2001/005270
(87) Internationale Veröffentlichungsnummer: WO 2001/090595

(56) Entgegenhaltungen:
- DE-A- 3 423 510
- DE-A- 4 218 717
- DE-A- 19 710 602
- GB-A- 2 267 134
- US-A- 5 004 077

## Beschreibung

Die Erfindung betrifft eine elektromotorische Feststellbremse, insbesondere für ein Kraftfahrzeug.

Elektromotorische Feststellbremsen in Kraftfahrzeugen sollen den mit Muskelkraft betätigten mechanischen Handbremshebel ersetzen. Hierbei muss die elektromotorische Feststellbremse die aufzubauende Bremskraft am Bremsseil in sehr kurzer Zeit mit dem Bordnetz verfügbaren Strom bei möglichst kompakten Abmessungen aufbauen können. Nach dem Anziehen der Bremse und Abschalten des Motors muss weiterhin durch geeignete Maßnahmen sichergestellt werden, dass sich die Bremse durch eine eventuelle unbeabsichtigte Rückbewegung des Bremsseils nicht von selbst lösen kann.

Bekannte elektromotorische Feststellbremsen, wie z.B. aus DE-A-4 218 717 bekannt, weisen einen Elektromotor auf, der ein Spindelgetriebe antreibt. Durch das Spindelgetriebe wird die Rotationsbewegung des Elektromotors in eine Translationsbewegung der Spindel umgewandelt. Die Translationsbewegung der Spindel wird auf ein Bremsstellgestänge übertragen, das fest mit dem Bremsseil verbunden ist. Zur Vermeidung einer unbeabsichtigten Rückbewegung des Bremsseils nach Abschalten des Motors ist das Spindelgetriebe selbsthemmend ausgelegt. Die Selbsthemmungseigenschaft wird durch eine niedrige Steigung des Gewindes der Spindel erreicht. Dies führt in der Folge jedoch zu einem geringen Wirkungsgrad der Feststellbremse, da ein solches Spindelgetriebe starke Reibungsverluste aufweist.

Der Erfindung liegt die Aufgabe zugrunde, eine elektromotorische Feststellbremse anzugeben, durch die eine unbeabsichtigte Rückbewegung des Bremsseils bei Abschalten des Motors vermieden wird und die zugleich im Vergleich zum Stand der Technik einen verbesserten Wirkungsgrad aufweist.

Die Aufgabe wird gelöst durch eine elektromotorische Feststellbremse mit folgenden Merkmalen: Die Feststellbremse weist einen Bremsstell- Elektromotor und eine davon angetriebene Bremsstell- Abtriebswelle auf. Ferner weist die Feststellbremse ein Bremsstell- Gestänge und eine Antriebsverbindung von der Bremsstell- Abtriebswelle zu dem Bremsstell- Gestänge auf. Die Antriebsverbindung ist ausgestaltet in Form einer Kurvenscheiben- bzw. Kulissenführung im Sinne einer Umsetzung der Rotation der Bremsstell- Abtriebswelle in eine Translation des Bremsstell- Gestänges durch ein entlang einer Fläche der Kurvenscheiben- bzw. Kulissenführung geführtes Verstellelement. Die Feststellbremse weist mindestens eine Raststellung in der Fläche der Kurvenscheiben- bzw. Kulissenführung auf im Sinne einer gegenüber Rückstellungskräften selbsthemmenden Fix- Positionierung des Verstellelements.

Zur Betätigung der Feststellbremse wird der Elektromotor betätigt. Der Rotor des Elektromotors dreht sich dabei in eine Richtung, die ein Zuspannen der Bremsbeläge des Fahrzeuges bewirken soll (Bremsrichtung). Die Drehbewegung in Bremsrichtung wird über die Bremsstell- Abtriebswelle auf die Kurvenscheiben- bzw. Kulissenführung übertragen. Dadurch bewegt sich das Verstellelement, das entlang einer ersten Achse verstellbar angeordnet ist, entlang der Fläche der Kurvenscheiben- bzw. Kulissenführung. Die Fläche der Kurvenscheiben- bzw. Kulissenführung ist so ausgebildet, dass das Verstellelement eine Translationsbewegung durchführt. Das Bremsstell-Gestänge, das beispielsweise wie das Verstellelement entlang der ersten Achse verstellbar angeordnet ist, führt daraufhin ebenfalls eine Translationsbewegung durch.

Die Antriebsverbindung bestehend aus einer solchen Kurvenscheiben- bzw. Kulissenführung und einem solchen Verstellelement weist sehr geringe Reibungsverluste auf, so dass die Feststellbremse einen hohen Wirkungsgrad aufweist. Die selbsthemmende Eigenschaft der Feststellbremse wird durch die Raststellung realisiert.

Die Steigung der Fläche der Kurvenscheiben- bzw. Kulissenführung an der Stelle, an der sich das Verstellelement zu einem bestimmten Zeitpunkt befindet, bestimmt zusammen mit der am Verstellelement durch das Bremsgestänge wirkenden Kraft das minimale erforderliche vom Elektromotor aufzubringende Drehmoment.

Die Raststellung stellt beispielsweise eine Vertiefung in der Fläche der Kurvenscheiben- bzw. Kulissenführung dar, in deren Mitte die Steigung der Fläche gleich Null ist. Bei Abschalten des Elektromotors bewirkt der durch das Bremsstell- Gestänge hervorgerufene Druck des Verstellelements auf die Fläche der Kurvenscheiben- bzw. Kulissenführung außerhalb der Raststellung, dass die Kurvenscheiben- bzw. Kulissenführung sich aufgrund der Steigung ihrer Fläche entgegen der Bremsrichtung dreht, bis das Verstellelement in der Raststellung einrastet. Die Vertiefung ist derart ausgelegt, dass das Verstellelement auch nicht aufgrund von Erschütterungen selbständig aus der Raststellung rutschen kann. Die Raststellung stellt ein lokales energetisches Minimum dar. Befindet sich das Verstellelement in der Raststellung, so führt der Druck des Verstellelements auf die Kurvenscheiben- bzw. Kulissenführung nicht zu einem Rückstellmoment auf Getriebe und Motor. Das Verstellelement ist daher in der Raststellung fest positioniert. Erst eine Betätigung des Elektromotors in Bremsrichtung oder in zur Bremsrichtung entgegengesetzter Drehrichtung kann das Verstellelement aus der Raststellung lösen.

Vorzugsweise befindet sich die Raststellung an der Stelle der Fläche der Kurvenscheiben- bzw. Kulissenführung, an der sich das Verstellelement befindet, wenn die Feststellbremse im wesentlichen mit Nennkraft angezogen ist.

Es ist vorteilhaft, wenn eine weitere Raststellung hinter der Raststellung angeordnet ist, um kurzfristige Längungen im Seil- und Bremssystem, vor allem Wärmespiele, ausgleichen und die volle Nennkraft erreichen zu können.

Es liegt im Rahmen der Erfindung, im Verlauf der Fläche der Kurvenscheiben- bzw. Kulissenführung weitere Raststellungen anzuordnen.

Da die Steigung der Fläche zusammen mit der Kraft, die durch das Bremsgestänge auf das Verstellelement wirkt, das minimale erforderliche Drehmoment des Elektromotors bestimmt, kann die Fläche durch Variation seiner Kurvensteigung so ausgelegt werden, dass der Elektromotor im wesentlichen während des gesamten Bremsvorgangs in etwa konstant belastet wird, obwohl während des Bremsvorgangs die Brems- Zustellkräfte für das Bremsstell- Gestänge stark variieren. Dadurch kann der Elektromotor ständig in seinem günstigsten Arbeitspunkt unter Erzeugung eines bestimmten Drehmoments arbeiten, so dass der Elektromotor hinsichtlich seiner Baugröße und seiner batteriebeanspruchenden Leistung entsprechend einer Minimal- Belastung ausgelegt werden kann. Dies führt zu einem besonders hohen Wirkungsgrad der Feststellbremse und einer guten Motorausnutzung. Die Bremszeit wird bei vorgegebener Maximalleistung des Elektromotors durch die beschriebenen Maßnahmen auf ein Minimum reduziert, da bei geringer Kraft am Verstellelement, das heißt bei einer geringen Brems- Zustellkraft, die Leistung des Elektromotors trotzdem optimal ausgenutzt wird, indem eine besonders schnelle Translationsbewegung des Bremsstell- Gestänges durchgeführt wird. In der Praxis bedeutet dies im wesentlichen, dass zu Beginn des Bremsvorgangs zur Überwindung des Lüftspiels und der anderen mechanischen Spiele eine große Steigung der Fläche, das heißt eine kleinere Übersetzung, und im Bereich der hohen Zuspannkräfte für das Anpressen der Bremsbeläge eine kleinere Steigung der Fläche, das heißt eine größere Übersetzung zwischen der Bremsstell- Abtriebswelle und dem Bremsstell- Gestänge vorgesehen ist.

Die Verwendung einer Kurvenscheiben- bzw. Kulissenführung ermöglicht also eine an die Bremsstellbelastung angepasste variable Übersetzung zwischen Rotation und Translation im Verlauf des Bremsvorgangs.

Zur Erzielung einer besonders kompakten Feststellbremse ist es vorteilhaft, wenn das Bremsstell- Gestänge achsparallel und in geringem radialen Abstand zu der Bremsstell- Abtriebwelle angeordnet ist. Die erste Achse, entlang der das Bremsstell- Gestänge verschiebbar ist, ist folglich parallel zu einer zweiten Achse, entlang der sich die Bremsstell- Abtriebswelle erstreckt. Die Kurvenscheiben- bzw. Kulissenführung ist konzentrisch um die Bremsstell- Abtriebswelle angeordnet, so dass sie mit der Bremsstell- Abtriebswelle rotiert. In diesem Fall ist die Kurvenscheiben- bzw. Kulissenführung axial ausgebildet, das heißt, dass die Kurvenscheiben- bzw. Kulissenführung ein axiales Höhenprofil aufweist, auf dem das Verstellelement bewegt wird. Eine solche Feststellbremse ist radial sehr kompakt und lässt sich folglich besonders einfach zwischen die Vordersitze des Kraftfahrzeugs anordnen.

Alternativ ist das Bremsstell- Gestänge im wesentlichen senkrecht zur Bremsstell- Abtriebswelle angeordnet. Das heißt, dass die erste Achse im wesentlichen senkrecht zur zweiten Achse steht. In diesem Fall ist die Kurvenscheiben- bzw. Kulissenführung nockenähnlich ausgestaltet. Die Fläche, entlang der das Verstellelement geführt wird, bildet den Umfang der Kurvenscheiben- bzw. Kulissenführung. Die Kurvenscheiben- bzw. Kulissenführung weist also ein radiales Höhenprofil auf.

Eine solche radiale Kurvenscheiben- bzw. Kulissenführung lässt sich besonders einfach und kostengünstig herstellen, da die Kurvenscheiben- bzw. Kulissenführung fertigungstechnisch gesehen zweidimensional ist.

Eine Feststellbremse mit einer radialen Kurvenscheiben- bzw. Kulissenführung weist den zusätzlichen Vorteil auf, dass das Verstellelement die Kurvenscheiben- bzw. Kulissenführung radial statt axial belastet, was zu wesentlich günstigeren Lagerkräften führt und wodurch die Lebensdauer der Feststellbremse erhöht wird.

Ein weiterer Vorteil einer Feststellbremse mit einer radialen Kurvenscheiben- bzw. Kulissenführung besteht darin, das eine Notbetätigung der Feststellbremse besonders leicht realisierbar ist. Verläuft die erste Achse, entlang der das Bremsstell- Gestänge verschiebbar ist, zwischen den Vordersitzen des Kraftfahrzeugs und in der Ebene des Kraftfahrzeugbodens, so kann die Notbetätigung als Kurbel ausgestaltet sein, deren Achse senkrecht zum Fahrzeugboden, das heißt von oben nach unten verläuft. Dazu verläuft die zweite Achse, entlang der sich die Bremsstell- Abtriebswelle erstreckt, entlang der Achse der Kurbel der Notbetätigung. Das Ende dieser Kurbel könnte in eine Innenkontur des von oben frei zugänglichen Endes der Motorachse - beispielsweise einen Innenvierkant - formschlüssig eingreifen.

Eine Kurbel zur Notbetätigung ist jedoch auch bei einer Feststellbremse mit axialer Kurvenscheiben- bzw. Kulissenführung möglich. In diesem Fall ist eine Kraftumlenkung erforderlich, z.B. in Form einer Flexwelle, durch die die Drehbewegung der Kurbel, deren Achse senkrecht zur ersten Achse steht, auf das Verstellelement übertragen wird.

Vorzugweise ist eine zusätzliche Hebelumsetzung zwischen dem Verstellelement und dem Bremsstell- Gestänge angeordnet um mit der Kurvenscheiben- bzw. Kulissenführung einen größeren Seilweg zurücklegen oder höhere Seilkräfte erreichen zu können.

Die Feststellbremse weist beispielsweise ein Getriebe, insbesondere ein Planetengetriebe, im Antriebsstrang zwischen der Rotorwelle des Bremsstell- Elektromotors und der Bremsstell-Abtriebswelle auf, um mit einem kleinen, kostengünstigen Motor große Drehmomente an der Abtriebswelle und in der Folge hohe Betätigungskräfte an den Bremsseilen erreichen zu können.

Im folgenden werden Ausführungsbeispiele der Erfindung anhand der Figuren näher erläutert.
- Figur 1: zeigt in perspektivischer Darstellung den Aufbau einer ersten elektromotorischen Feststellbremse.
- Figur 2: zeigt in Seitenansicht die gegenseitige Stellung von Kurvenscheiben- bzw. Kulissenführung und Verstellelement zu Beginn eines Bremsvorgangs der ersten Feststellbremse.
- Figur 3: zeigt die gegenseitige Stellung von Kurvenscheiben- bzw. Kulissenführung und Verstellelement zum Ende eines Bremsvorgangs der ersten Feststellbremse.
- Figur 4: zeigt die Abwicklung des Höhenprofils über den Umdrehungswinkel der Kurvenscheiben- bzw. Kulissenführung und die Lagedarstellung des Verstellelements bzw. dessen endseitiger Laufrolle gemäß den beiden Stellungen aus Figur 2 und Figur 3.
- Figur 5: zeigt in perspektivischer Darstellung den Aufbau einer zweiten elektromotorischen Feststellbremse.
- Figur 6: zeigt die gegenseitige Stellung von Kurvenscheiben- bzw. Kulissenführung und Verstellelement zu Beginn eines Bremsvorganges der zweiten Feststellbremse.
- Figur 7: zeigt die gegenseitige Stellung von Kurvenscheiben- bzw. Kulissenführung und Verstellelement zum Ende eines Bremsvorgangs der zweiten Feststellbremse.

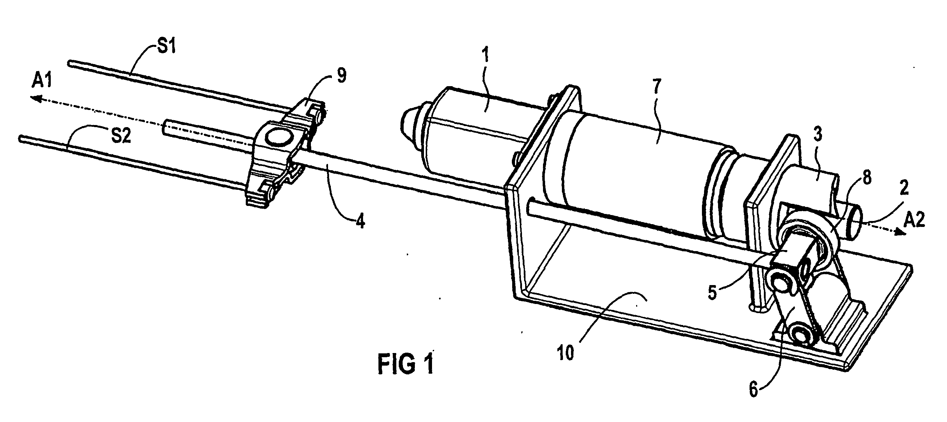

In einem ersten Ausführungsbeispiel umfasst eine erste Feststellbremse einen Bremsstell- Elektromotor 1 insbesondere einen für einen Fensterheber- Stellantrieb in einem Kraftfahrzeug entwickelten Kommutatormotor auf. Der Elektromotor 1 treibt in einer Aufnahmehalterung 10 über ein axial nachgeschaltetes Planetengetriebe 7 eine Bremsstell- Abtriebswelle 2 an. Die Bremsstell- Abtriebswelle erstreckt sich entlang einer zweiten Achse A2 (siehe Figur 1).

Konzentrisch zur Bremsstell- Abtriebswelle 2 ist eine axiale Kurvenscheiben- bzw. Kulissenführung 3 angeordnet, die ein axiales Höhenprofil 3.1 aufweist, das eine Fläche F beschreibt. Ein querriegelartiges axiales Verstellelement 5 mit einer Laufrolle 8 ist entlang einer ersten Achse A1, die parallel zur zweiten Achse A2 verläuft, verstellbar angeordnet. Die Laufrolle 8 liegt auf der Fläche F auf. Bei Drehung der Kurvenscheiben- bzw. Kulissenführung 3, wird die Laufrolle 8 entlang der Fläche F geführt, wodurch das Verstellelement 5 eine dem Verlauf des axialen Höhenprofils 3.1 (Hubhöhe H als Funktion des Umdrehungswinkel α) entsprechende Translationsbewegung ausführt. Für die mit der Bremsstell- Abtriebswelle 2 rotierende Kurvenscheiben- bzw. Kulissenführung 3 ist ein maximaler Umdrehungswinkel von ca. 360° vorgesehen.

Das Verstellelement 5 ist unter Vermittlung einer Hebelumsetzung 6 an ein parallel zur ersten Achse A1 in dichtem radialen Abstand zu einer Seilwaage 9 mit in an sich bekannter Weise angekoppelten Seilzug- Bremsbetätigungen S1, S2 rückführenden Bremsstell- Gestänge 4 angelenkt. Dadurch kann die Rotationsbewegung der Bremsstell- Abtriebswelle 2 auf engstem Raum und mit einfach fertigbaren sowie montierbaren Umsetzungs- bzw. Übersetzungsmitteln in eine Translationsbewegung des Bremsstell- Gestänges 4 übertragen werden. Die Hebelumsetzung 6 kann je nach motorischer Antriebsleistung bzw. bremsseitiger Bremsbelastung vorteilhaft auch als Hebelübersetzung bzw. Hebeluntersetzung mit entsprechend unterschiedlichen Hebellängen eines antriebsseitigen Hebelarms bzw. eines abtriebsseitigen Hebelarms eines um einen Drehpunkt schwenkbaren Umsetzungshebels ausgebildet sein.

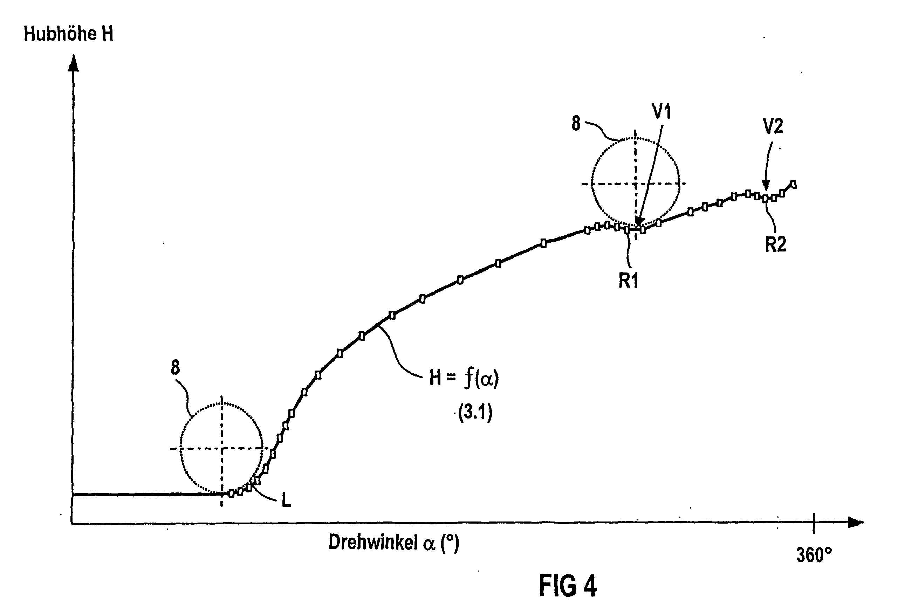

Ein für die Betätigung einer Feststellbremse spezifisches Höhenprofil H = f(α) ist in Figur 4 dargestellt. Das Höhenprofil, das den Verlauf der Fläche F der Kurvenscheiben- bzw. Kulissenführung 3, auf dem das Verstellelement 5 bewegt wird, wiedergibt, weist zwei Raststellungen R1, R2 auf. Die erste Raststellung R1 befindet sich bei α = ca. 320° an der Stelle der Fläche F der Kurvenscheiben- bzw. Kulissenführung 3, an der sich das Verstellelement 5 befindet, wenn die Feststellbremse im wesentlichen mit Nennkraft angezogen ist. Die zweite Raststellung R2 befindet sich hinter der ersten Raststellung R1.

Figur 4 zeigt ferner zwei beispielhafte Positionen zwischen einer linken Lösestellung L (α = 40°) und einer rechten Bremsstellung der das freie Ende des Verstellelements 5 führenden Laufrolle 8. In der rechten Bremsstellung befindet sich das Vestellelement 5 in der ersten Raststellung R1. In beiden Raststellungen R1, R2 ist nach einer Ausgestaltung der Erfindung die Laufrolle 8 und somit das freie Ende des Verstellelements 5 entgegen einer möglichen systembedingten Rückstellkraft nach Art einer durch den Antrieb des Bremsstell- Elektromotor 1 bei dessen Aktivierung aufhebbaren Selbsthemmung dadurch fixierbar, dass Vertiefungen V1, V2 in dem Verlauf H = f(α) des axialen Höhenprofils 3.1 der Kurvenscheiben- bzw. Kulissenführung 3 vorgesehen sind, in welche die Laufrolle 8 einsinkt und dadurch fixierbar ist. Auch die linke Lösestellung L stellt eine Art Vertiefung dar, in der das Verstellelement 5 verbleibt, wenn der Elektromotor 1 nicht betätigt wird.

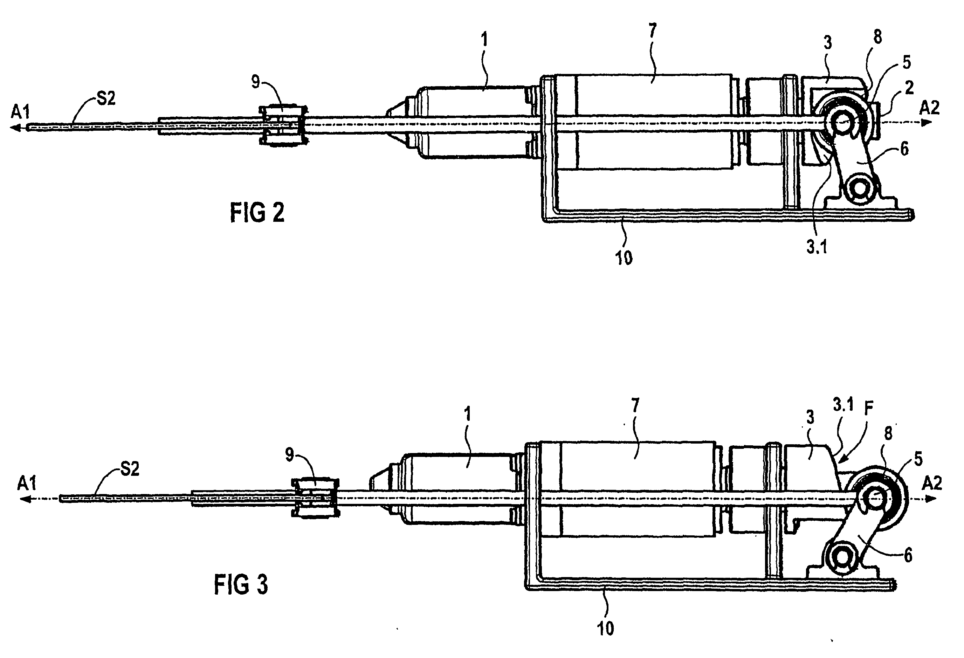

Figuren 2 und 3 zeigen in Seitenansicht von Figur 1 die beiden zuvor beschriebenen Lösestellungen des Verstellelements 5.

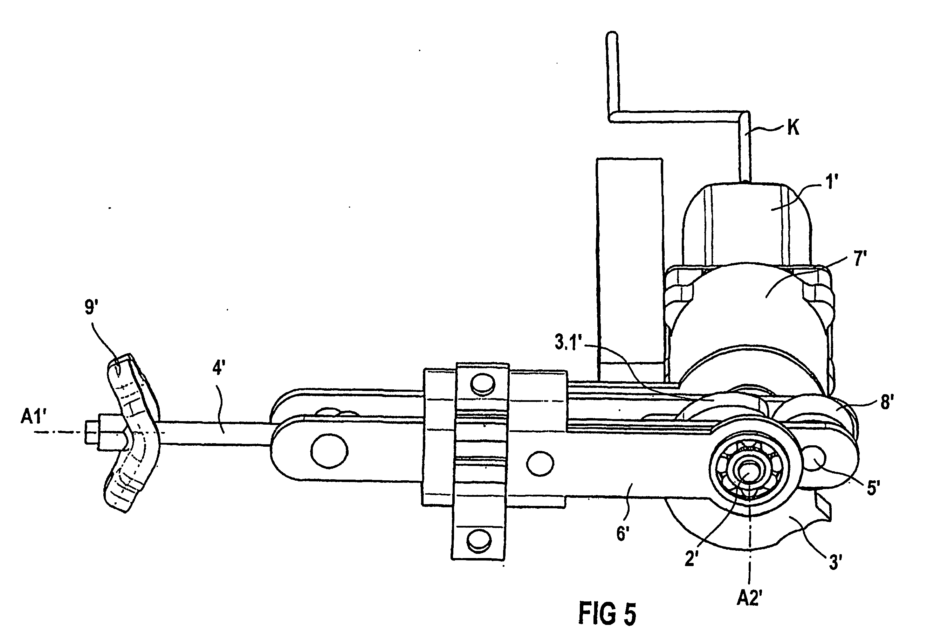

In einem zweiten Ausführungsbeispiel ist eine zweite Feststellbremse vorgesehen, die wie die erste Feststellbremse einen Bremsstell- Elektromotor 1', eine Aufnahmehalterung 10', ein Planentengetriebe 7' und eine Bremsstell- Abtriebswelle 2', die sich entlang einer zweiten Achse A2' erstreckt, aufweist (siehe Figur 5). Konzentrisch zu der Bremsstell- Abtriebswelle 2' ist eine radiale Kurvenscheiben- bzw. Kulissenführung 3' befestigt, die im Gegensatz zum ersten Ausführungsbeispiel ein radiales Höhenprofil 3.1' aufweist.

Die zweite Feststellbremse weist ein Verstellelement 5' mit einer Laufrolle 8' auf, die entlang dem radialen Höhenprofil, also auf einer Fläche F' am Umfang der Kurvenscheiben- bzw. Kulissenführung 3' geführt wird und dadurch eine Translationsbewegung entlang einer ersten Achse A1' ausführt, die senkrecht zur zweiten Achse A2' steht.

Die Fläche F' weist zwei als Vertiefungen ausgestaltete Raststellungen R1', R2' auf.

Das Verstellelement 5' ist direkt oder indirekt, z. B. über eine schlitzgeführte Zugvorrichtung 6' oder einen Hebelmechanismus oder andere bekannte Linearführungsprinzipien und über ein Bremsstell- Gestänge 4' mit einer Seilwaage 9' verbunden, welche parallel zur ersten Achse A1' angeordnet ist.

In Figur 1 ist schematisch eine Kurbel K zur manuellen Notbetätigung gezeigt. Die Achse der Kurbel K verläuft parallel zur zweiten Achse A2'.

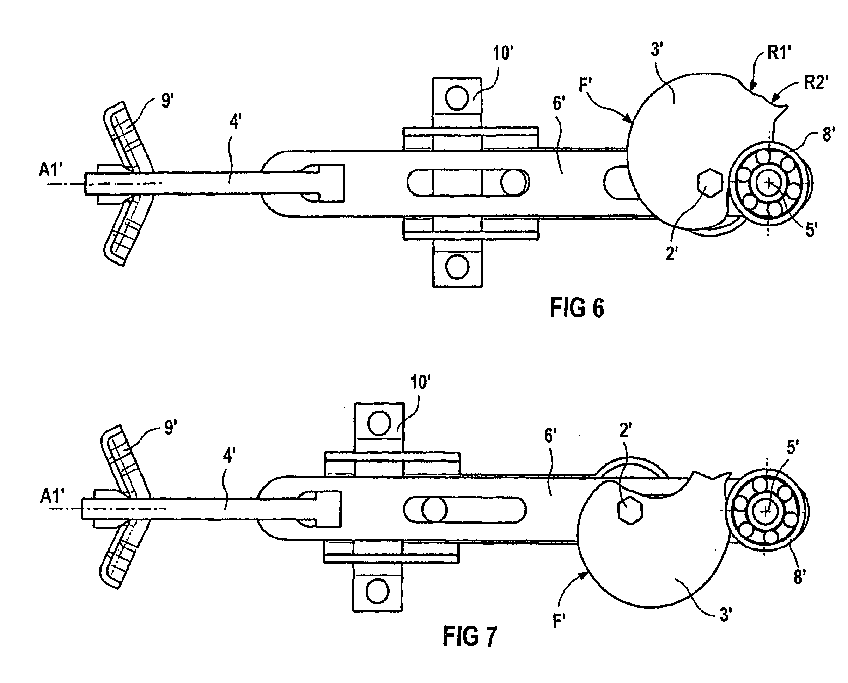

Figuren 6 und 7 zeigen in Seitenansicht von Figur 5 die beiden im Zusammenhang mit Figur 4 beschriebenen Fixierungspositionen des Verstellelements 5'.

## Patentansprüche

1. Elektromotorische Feststellbremse insbesondere für ein Kraftfahrzeug,
- mit einem Bremsstell- Elektromotor (1), insbesondere Kommutatormotor,
- mit einer vom Bremsstell- Elektromotor (1) angetriebenen Bremsstell- Abtriebswelle(2),
- mit einem Bremsstell- Gestänge (4),
- mit einer Antriebsverbindung von der Bremsstell- Abtriebswelle (2) zum Bremsstell- Gestänge (4) in Form einer Kurvenscheiben- bzw. Kulissenführung (3) im Sinne einer Umsetzung der Rotation der Bremsstell- Abtriebswelle (2) in eine Translation des Bremsstell- Gestänges (4) durch ein entlang einer Fläche (F) der Kurvenscheiben- bzw. Kulissenführung (3) geführtes Verstellelement (5),
- mit mindestens einer Raststellung (R1) in der Fläche (F) der Kurvenscheiben- bzw. Kulissenführung (3) im Sinne einer gegenüber Rückstellungskräften selbsthemmenden Fix-Positionierung des Verstellelements (5).

2. Feststellbremse nach Anspruch 1,
- bei der sich die Raststellung (R1) an der Stelle der Fläche (F) der Kurvenscheiben- bzw. Kulissenführung (3) befindet, an der sich das Verstellelement (5) befindet, wenn die Feststellbremse im wesentlichen mit Nennkraft angezogen ist.

3. Feststellbremse nach Anspruch 1 oder 2,
- bei der in der Fläche (F) der Kurvenscheiben- bzw. Kulissenführung (3) mindestens eine weitere Raststellung (R2) angeordnet ist.

4. Feststellbremse nach einem der Ansprüche 1 bis 3,
- mit einer Ausbildung der Kurvenscheiben - bzw. Kulissenführung (3) im Sinne einer im wesentlichen konstanten Belastung des Bremsstell- Elektromotors (1) während im wesentlichen des gesamten Bremsvorganges.

5. Feststellbremse nach einem der Ansprüche 1 bis 4,
- bei der die Kurvenscheiben- bzw. Kulissenführung (3) als axiale Kurvenscheiben- bzw. Kulissenführung (3) ausgebildet ist,
- bei der die Fläche (F) der Kurvenscheiben- bzw. Kulissenführung (3) ein axiales Höhenprofil bildet,
- bei der das Bremsstell- Gestänge (4) parallel zu einer ersten Achse (A1) verstellbar angeordnet ist,
- bei der sich die Bremsstell- Abtriebswelle (2) entlang einer zweiten Achse (A2) erstreckt,
- bei der die erste Achse (A1) und die zweite Achse (A2) im wesentlichen parallel zueinander verlaufen.

6. Feststellbremse nach einem der Ansprüche 1 bis 4,
- bei der die Kurvenscheiben- bzw. Kulissenführung (3') nockenförmig ausgebildet ist,
- bei der die Fläche (F') der Kurvenscheiben- bzw. Kulissenführung (3') ein radiales Höhenprofil bildet,
- bei der das Bremsstell- Gestänge (4') parallel zu einer ersten Achse (A1') verstellbar angeordnet ist,
- bei der sich die Bremsstell- Abtriebswelle (2') entlang einer zweiten Achse (A2') erstreckt,
- bei der die erste Achse (A1') im wesentlichen senkrecht zur zweiten Achse (A2') verläuft.

7. Feststellbremse nach Anspruch 6,
- mit einer Kurbel (K) zur Notbetätigung der Feststellbremse,
- bei der die Kurbelachse der Kurbel (K) parallel zur zweiten Achse (A2') verläuft.

8. Feststellbremse nach einem der Ansprüche 1 bis 7,
- mit einer zusätzlichen Hebelumsetzung (6) zwischen dem Verstellelement (5) an dem Bremsstell- Gestänge (4).

9. Feststellbremse nach einem der Ansprüche 1 bis 8,
- mit einem Getriebe (7), insbesondere einem Planetengetriebe, im Antriebsstrang zwischen dem Bremsstell- Elektromotor (1) und der Bremsstell- Abtriebswelle (2).

10. Feststellbremse nach einem der Ansprüche 1 bis 9,
- bei der die Raststellung (R1) als Vertiefung der Fläche (F) der Kurvenscheiben- bzw. Kulissenführung (3) ausgebildet ist.

## Claims

1. Electric-motor-driven parking brake, in particular for a motor vehicle,
- having a brake-actuating electric motor (1), in particular a commutator motor,
- having a brake-actuating output shaft (2) driven by the brake-actuating electric motor (1),
- having a brake-actuating linkage (4),
- having a drive linkage from the brake-actuating output shaft (2) to the brake-actuating linkage (4) in the form of a cam disk or, as the case may be, gate guide (3) which is cam-like in the sense that it converts a rotation of the brake-actuating output shaft (2) into a translational movement of the brake-actuating linkage (4) by means of an actuating element (5) which is guided along a surface (F) of the cam disk or gate guide (3),
- having at least one indexed position (R1) in the surface (F) of the cam disk or gate guide (3) with the aim of effecting a fixed positioning of the actuating element which is self-locking with respect to restorative forces.

2. Parking brake according to claim 1,
- wherein the indexed position (R1) is located at the position on the surface (F) of the cam disk or gate guide (3) at which the actuating element (5) is located when the parking brake is pulled on with essentially nominal force.

3. Parking brake according to claim 1 or 2,
- wherein at least one further indexed position (R2) is arranged in the surface (F) of the cam disk or gate guide (3).

4. Parking brake according to one of the claims 1 to 3,
- having an embodiment of the cam disk or gate guide (3) such that the brake-actuating electric motor (1) I subject to an essentially constant load over essentially the entire braking operation.

5. Parking brake according to one of the claims 1 to 4,
- wherein the cam disk or gate guide (3) is embodied as an axial cam disk or gate guide (3),
- wherein the surface (F) of the cam disk or gate guide (3) forms an axial height profile,
- wherein the brake-actuating linkage (4) is arranged so that it can move along a line parallel to a first axis (A1),
- wherein the brake-actuating output shaft (2) extends along a second axis (A2),
- wherein the first axis (A1) and the second axis (A2) run essentially parallel to one another.

6. Parking brake according to one of the claims 1 to 4,
- wherein the cam disk or gate guide (3') is embodied in the shape of a cam,
- wherein the surface (F') of the cam disk or gate guide (3') has a radial height profile,
- wherein the brake-actuating linkage (4') is arranged so that it can move along a line parallel to a first axis (A1'),
- wherein the brake-actuating output shaft (2') extends along a second axis (A2'),
- wherein the first axis (A1') runs essentially perpendicularly with respect to the second axis (A2').

7. Parking brake according to claim 6,
- having a crank (K) serving as an emergency override for the parking brake,
- wherein the crank axis of the crank (K) runs parallel to the second axis (A2').

8. Parking brake according to one of the claims 1 to 7,
- having an additional lever translation mechanism (6) between the actuating element (5) and the brake-actuating linkage (4).

9. Parking brake according to one of the claims 1 to 8,
- having a gear, in particular a planetary gear, in the drive train between the brake-actuating electric motor (1) and the brake-actuating output shaft (2).

10. Parking brake according to one of the claims 1 to 9,
- wherein the indexed position (R1) is embodied as a depression in the surface (F) of the cam disk or gate guide (3).

## Revendications

1. Frein de stationnement électromoteur destiné notamment à un véhicule automobile, lequel comprend :
- un moteur électrique de blocage de frein (1), notamment un moteur à collecteur,
- un arbre commandé de blocage de frein (2) entraîné par le moteur électrique de blocage de frein (1),
- une tringlerie de blocage de frein (4),
- une liaison de transmission entre l'arbre commandé de blocage de frein (2) et la tringlerie de blocage de frein (4) sous la forme d'un guide à disque-came ou à coulisse (3) destiné à transformer la rotation de l'arbre commandé de blocage de frein (2) en une translation de la tringlerie de blocage de frein (4) au moyen d'un élément de réglage (5) guidé le long d'une surface (F) du guide à disque-came ou à coulisse (3),
- au moins une position d'enclenchement (R1) ménagée dans la surface (F) du guide à disque-came ou à coulisse (3) en tant que positionnement fixe autobloquant de l'élément de réglage (5) face à des forces de rappel.

2. Frein de stationnement selon la revendication 1,
- dans lequel la position d'enclenchement (R1) se trouve à l'endroit de la surface (F) du guide à disque-came ou à coulisse (3) où se trouve l'élément de réglage (5) lorsque le frein de stationnement est serré essentiellement avec une force nominale donnée.

3. Frein de stationnement selon la revendication 1 ou 2,
- dans lequel au moins une autre position d'enclenchement (R2) est disposée dans la surface (F) du guide à disque-came ou à coulisse (3).

4. Frein de stationnement selon l'une des revendications 1 à 3, lequel comprend
- une réalisation du guide à disque-came ou à coulisse (3) permettant une charge essentiellement constante du moteur électrique de blocage de frein (1), et ce essentiellement pendant tout le processus de freinage.

5. Frein de stationnement selon l'une des revendications 1 à 4, dans lequel
- le guide à disque-came ou à coulisse (3) est réalisé sous la forme d'un guide à disque-came ou à coulisse (3) axial,
- la surface (F) du guide à disque-came ou à coulisse (3) forme un profil de hauteur axial,
- la tringlerie de blocage de frein (4) est disposée de manière réglable parallèlement à un premier axe (A1),
- l'arbre commandé de blocage de frein (2) s'étend le long d'un deuxième axe (A2),
- le premier axe (A1) et le deuxième axe (A2) s'étendent essentiellement parallèlement l'un à l'autre.

6. Frein de stationnement selon l'une des revendications 1 à 4, dans lequel
- le guide à disque-came ou à coulisse (3') est réalisé sous forme de came,
- la surface (F') du guide à disque-came ou à coulisse (3') forme un profil de hauteur radial,
- la tringlerie de blocage de frein (4') est disposée de manière réglable parallèlement à un premier axe (A1'),
- l'arbre commandé de blocage de frein (2') s'étend le long d'un deuxième axe (A2'),
- le premier axe (A1') s'étend essentiellement perpendiculairement au deuxième axe (A2').

7. Frein de stationnement selon la revendication 6 :
- comprenant une manivelle (K) destinée à l'actionnement manuel du frein de stationnement en cas d'urgence,
- dans lequel l'axe de la manivelle (K) s'étend parallèlement au deuxième axe (A2').

8. Frein de stationnement selon l'une des revendications 1 à 7, lequel comprend
- une conversion à levier supplémentaire (6) disposée entre l'élément de réglage (5) et la tringlerie de blocage de frein (4).

9. Frein de stationnement selon l'une des revendications 1 à 8, lequel comprend :
- un engrenage (7), notamment un engrenage planétaire, situé dans la chaîne cinématique entre le moteur électrique de blocage de frein (1) et l'arbre commandé de blocage de frein (2).

10. Frein de stationnement selon l'une des revendications 1 à 9, dans lequel
- la position d'enclenchement (R1) est réalisée sous forme de creux ménagé dans la surface (F) du guide à disque-came ou à coulisse (3).
